# EUROPÄISCHE PATENTSCHRIFT

(11) **EP 3 686 033 B1**
(45) Veröffentlichungstag und Bekanntmachung des Hinweises auf die Patenterteilung: **27.10.2021**
(21) Anmeldenummer: 19207331.0
(22) Anmeldetag: 06.11.2019
(51) Int. Cl.: B60C 11/03, B60C 11/13

(54) **FAHRZEUGLUFTREIFEN**
PNEUMATIC TYRE
PNEUMATIQUES DE VÉHICULE

(30) Priorität: 28.01.2019 DE 102019201010
(43) Veröffentlichungstag der Anmeldung: 29.07.2020
(73) Patentinhaber: Continental Reifen Deutschland GmbH, 30165 Hannover (DE)
(72) Erfinder: Özüduru, Ahmet, 30419 Hannover (DE); Fischer, Markus, 30419 Hannover (DE); Pagac, Lubomir, 30419 Hannover (DE)
(74) Vertreter: Continental Corporation

(56) Entgegenhaltungen:
- EP-A1- 1 752 314
- WO-A1-2009/077231
- DE-A1-102016 218 980
- DE-A1-102016 218 981
- JP-A- H0 648 117
- JP-A- H0 648 119

## Beschreibung

Die Erfindung betrifft einen Fahrzeugluftreifen mit einem Laufstreifen mit zwei durch eine Umfangsrille voneinander getrennten mittleren Profilblockreihen mit Profilblöcken und mit diese voneinander trennenden, zur axialen Richtung gewinkelten, innerhalb jeder Profilbockreihe gegenüber der Reifenumfangsrichtung gleichsinnig orientierten Querrillen, wobei Querrillen vorgesehen sind, in welchen jeweils eine Grundanhebung ausgebildet ist, und wobei Profilblöcke vorgesehen sind, in welchen jeweils eine in den jeweiligen Profilblock durchquerende Schrägnut verläuft, welche in die eine Querrille im Bereich der und radial außerhalb der Grundanhebung einmündet, zur Umfangsrichtung unter einem Winkel von 6° bis 12° verläuft und eine über ihren Verlauf kontinuierlich zunehmende Breite und daher ein schmales und ein breites Nutende aufweist.

Ein derartiger Fahrzeugluftreifen, welcher für das Fahren unter winterlichen Fahrbedingungen besonders gut geeignet ist, ist beispielsweise aus der DE 10 2016 218 980 A1 und aus der DE 10 2016 218 981 A1 bekannt. Die Querrillen setzen sich jeweils aus zwei unter einem stumpfen Winkel aneinander anschließenden Rillenabschnitten zusammen, wobei in jeder Querrille eine über ihre Knickstelle verlaufende und daher in Draufsicht gewinkelte Grundanhebung ausgebildet ist. Ferner sind in sämtlichen Profilblöcken der beiden mittleren Profilblockreihen in die Querrillen einmündende Schrägnuten ausgebildet, welche zur Umfangsrichtung unter einem Winkel von 3° bis 15°, insbesondere von 5° bis 15°, verlaufen, wobei sämtliche Schrägnuten bezüglich der Umfangsrichtung gleichsinnig geneigt sind. Die Schrägnuten weisen eine Tiefe von 1,5 mm bis 2,5 mm, an ihrem breiten Nutende eine Breite von 1,5 mm bis 2,5 mm und an ihrem schmalen Nutende eine Breite von 0,5 mm bis 1,5 mm auf. Durch die Grundanhebungen werden die Profilblöcke der mittleren Profilblockreihen gegeneinander abgestützt, wodurch die Steifigkeit der Profilblockreihen erhöht wird. Die Schrägnuten unterstützen die Wasserableitung und in den "geknickten" Querrillen kann sich gut Schnee ansammeln, wodurch der Schneegriff verbessert wird. Die sich verringernde Breite der Schrägnuten ist insbesondere im Hinblick auf die Steifigkeit der Profilblöcke vorteilhaft.

Der Erfindung liegt die Aufgabe zugrunde, einen Fahrzeugluftreifen der eingangs genannten Art hinsichtlich seiner Wasserableiteigenschaften weiter zu verbessern. Insbesondere sollen weitere Verbesserungen im Hinblick auf das Aquaplaning-und das Bremsverhalten auf nasser Fahrbahn erzielt werden.

Gelöst wird die gestellte Aufgabe erfindungsgemäß dadurch,
dass der Laufstreifen laufrichtungsgebunden ausgeführt ist,
wobei in jeder Profilblockreihe ausschließlich jeder zweite Profilblock mit einer Schrägnut und ausschließlich jede zweite Querrille mit einer Grundanhebung versehen ist,
wobei in jeder der beiden mittleren Profilblockreihen die Schrägnuten bezüglich der Reifenumfangsrichtung gleichsinnig zu den Querrillen geneigt sind,
wobei die Querrillen und die Schrägnuten in der einen mittleren Profilblockreihe zu den Querrillen und Schrägnuten in der anderen mittleren Profilblockreihe derart bezüglich der Reifenumfangsrichtung gegensinnig geneigt sind, dass bei am Fahrzeug montiertem Fahrzeugluftreifen bei Vorwärtsfahrt die Querrillen mit ihren weiter laufstreifeninnenseitig befindlichen Rillenenden, und die Schrägnuten mit ihren schmalen Nutenden zuerst in den Untergrund eintreten.

Wie nachfolgend erläutert, ermöglicht die laufrichtungsgebundene Ausführung des Laufstreifenprofiles eine für die Wasserableiteigenschaften besonders vorteilhafte Orientierung der Querrillen und der Schrägnuten. Sämtliche Schrägnuten sind in den mittleren Profilblockreihen gleichsinnig zu den Querrillen geneigt, wodurch beim Fahren auf nasser Fahrbahn von den Schrägnuten aufgenommenes Wasser zunächst in die Querrille, von dieser unmittelbar in die jeweilige als Hauptentwässerungsrille wirkende schulterseitige Umfangsrille und daher in Richtung Laufstreifenaußenseite abgeleitet wird. Da bei sämtlichen Schrägnuten das breite Nutende, über welche das Wasser aus der jeweiligen Schrägnut herausfließt, bei einer Grundanhebung liegt, wird das aus den Schrägnuten fließende Wasser auf verwirbelungsarme Weise unmittelbar über die Grundanhebungen hinweggeleitet. Da die Breite der Schrägnuten in Wasserflussrichtung kontinuierlich zunimmt, ist zudem die Gefahr, dass eine Schrägnut "überläuft", äußerst gering. Es sind dadurch die Wasserableiteigenschaften des Laufstreifenprofils gegenüber Laufstreifenprofilen der eingangs genannten Art auch derart verbessert, dass beim Bremsen auf nasser Fahrbahn die Gefahr eines Aquaplaning begünstigenden "Wasserstaus" in den Rillen und Nuten verringert ist.

Gemäß einer bevorzugten Ausführungsvariante beträgt die Breite der Schrägnuten am breiten Nutende 140% bis 300%, insbesondere 160% bis 200%, der Breite der Schrägnuten am schmalen Nutende. Eine solche Breitenvariation bewirkt insbesondere eine weitere Verbesserung der Wasserableiteigenschaften des Laufstreifenprofils.

Es ist dabei ferner von Vorteil, wenn die Breite der Schrägnuten am schmalen Nutende 2,0 mm bis 6,0 mm, insbesondere bis zu 4,0 mm, beträgt.

Gemäß einer weiteren bevorzugten Ausführungsvariante weisen die Schrägnuten in radialer Richtung eine Tiefe von 3,0 mm bis 5,0 mm auf. Durch diese Maßnahme ist das Laufstreifenprofil im Hinblick auf die Wasserableiteigenschaften und die Steifigkeit seiner mittleren Profilblockreihen sehr ausgewogen.

Die erwähnten Grundanhebungen verringern das Leervolumen in den entsprechenden Querrillen. Für gute Wasserableiteigenschaften ist es daher vorteilhaft, wenn die Querrillen, in welchen jeweils eine Grundanhebung ausgebildet ist, in Draufsicht gerade verlaufen.

Gemäß einer weiteren bevorzugten Ausführungsvariante setzen sich die Querrillen, in welchen keine Grundanhebungen ausgebildet sind, in Draufsicht jeweils aus einem laufstreifeninnenseitigen Rillenabschnitt und einem gegenüber dem laufstreifeninnenseitigen Rillenabschnitt zur axialen Richtung stärker geneigten laufstreifenaußenseitigen Rillenabschnitt zusammen, wobei die Schrägnuten jeweils in einen laufstreifeninnenseitigen Rillenabschnitt einmünden.

Bei dieser Variante ist es ferner vorteilhaft, wenn die laufstreifeninnenseitigen Rillenabschnitte der Querrillen, in welchen keine Grundanhebungen ausgebildet sind, schmäler sind als jene Querrillen, in welchen jeweils eine Grundanhebung ausgebildet ist. Durch diese Maßnahme lässt sich insbesondere die Steifigkeit der Profilblockreihe vorteilhaft beeinflussen.

Gemäß einer weiteren bevorzugten Ausführungsvariante befinden sich die zu der einen mittleren Profiblockreihe gehörenden Profilblöcke zu den zu der anderen mittleren Profilblockreihe gehörenden Profilblöcken bezüglich der Umfangsrichtung in übereinstimmenden Positionen, wobei die Schrägnuten in axial nebeneinander liegenden Profilblöcken verlaufen.

Gemäß einer weiteren bevorzugten Ausführungsvariante weisen die Grundanhebungen in den Querrillen zu der die Profilblockreihen trennenden Umfangsrille in axialer Richtung einen Abstand von 10,0 mm bis 25,0 mm auf. In solchen Abständen positionierte Grundanhebungen wirken sich auf die Stabilisierung der entsprechenden Profilblöcke besonders vorteilhaft aus.

Ferner ist es bevorzugt, wenn die Schrägnuten Nutflanken aufweisen, welche, im Querschnitt betrachtet, zur radialen Richtung unter einem Winkel von 0° bis zu 7°, insbesondere von bis zu 5°, verlaufen. Derartige Schrägnuten wirken stabilisierend, wodurch insbesondere die Nassbremseigenschaften des Reifens weiter verbessert werden.

Gemäß einer weiteren bevorzugten Ausführungsvariante sind die Querrillen, in welchen keine Grundanhebungen ausgebildet sind, in radialer Richtung insbesondere um 1,5 mm seichter ausgeführt als die Querrillen, in welchen jeweils eine Grundanhebung ausgebildet ist. Durch solche Querrillen lässt sich die Steifigkeit der Profilblockreihe erhöhen. Die Querrillen befinden sich dabei an den einlaufenden Enden der Schrägnuten, sodass aus den Schrägnuten kaum Wasser in diese Querrillen geleitet wird.

Mit den erwähnten Maßnahmen lässt sich eine im Hinblick auf die Wasserableiteigenschaften besonders vorteilhafte Laufstreifenprofilierung erreichen, wenn die die Profilblockreihen voneinander trennende Umfangsrille entlang der Reifenäquatorialebene verläuft.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine schematische Draufsicht auf einen Ausschnitt eines Laufstreifens eines Fahrzeugluftreifens mit einer Ausführungsvariante der Erfindung,
Fig. 2 einen Schnitt entlang der Linie II-II der Fig. 1,
Fig. 3 einen Schnitt entlang der Linie III-III der Fig. 1 und
Fig. 4 einen Schnitt entlang der Linie IV-IV der Fig. 1.

Gemäß der Erfindung ausgeführte Fahrzeugluftreifen sind Reifen eines beliebigen Typs, insbesondere Reifen in Radialbauart für Personenkraftwagen, Vans, Light-Trucks oder Nutzfahrzeugreifen.

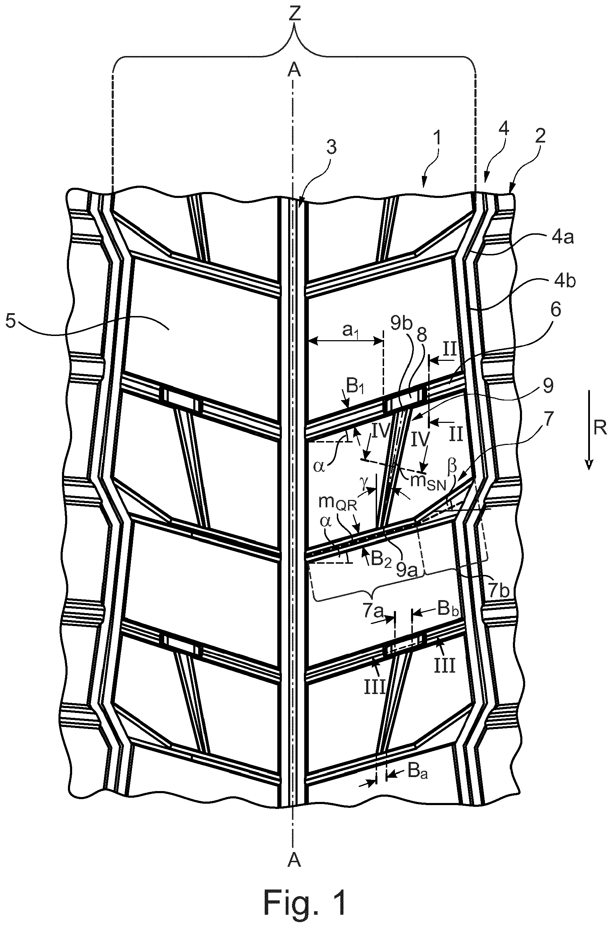

Fig. 1 zeigt eine Draufsicht auf einen Umfangsabschnitt eines Laufstreifens eines Fahrzeugluftreifens mit zwei in einem zentralen Laufstreifenbereich Z verlaufenden mittleren Profilblockreihen 1 und zwei in Fig. 1 lediglich angedeuteten schulterseitigen Profilblockreihen 2. Die mittleren Profilblockreihen 1 und damit auch der Laufstreifen sind laufrichtungsgebunden ausgeführt, wobei der Fahrzeugluftreifen derart am Fahrzeug zu montieren ist, dass er die in Fig. 1 durch den Pfeil R symbolisierte Abrollrichtung bei Vorwärtsfahrt aufweist.

Die mittleren Profilblockreihen 1 sind von einer entlang der Reifenäquatorialebene (Linie A-A) sowie beim gezeigten Ausführungsbeispiel in Draufsicht gerade verlaufenden, zentralen Umfangsrille 3 voneinander getrennt. Zu den schulterseitigen Profilblockreihen 2 sind die mittleren Profilblockreihen 1 durch schulterseitige Umfangsrillen 4 getrennt, welche beim gezeigten Ausführungsbeispiel in Draufsicht zick-zack-förmig verlaufen und sich aus abwechselnd aufeinanderfolgenden kürzeren Abschnitten 4a und längeren Abschnitten 4b zusammensetzen. Die Umfangsrillen 3,4 sind auf die für den jeweiligen Fahrzeugluftreifen vorgesehene Profiltiefe ausgeführt, welche für Personenkraftwagen, Vans oder Light-Trucks üblicherweise 6,5 mm bis 9,0 mm beträgt.

Jede mittlere Profilblockreihe 1 weist eine Vielzahl von in Umfangsrichtung aufeinanderfolgenden Profilblöcken 5 auf, welche durch in Draufsicht gerade verlaufende Querrillen 6 und in Draufsicht an einer Stelle geringfügig geknickte Querrillen 7 voneinander getrennt sind, wobei innerhalb jeder Profilblockreihe 1 abwechselnd eine gerade Querrille 6 auf eine geknickte Querrille 7 folgt. Die geraden Querrillen 6 münden in die längeren Abschnitte 4b der jeweiligen Umfangsrille 4 und die geknickten Querrillen 7 münden in die kürzeren Abschnitte 4a der jeweiligen Umfangsrille 4.

Die Querrillen 6, 7 sind derart orientiert, dass sie beim Abrollen des Reifens bei Vorwärtsfahrt mit ihren an der zentralen Umfangsrille 3 liegenden, laufstreifeninnseitigen Rillenenden zuerst in den Untergrund eintreten, sodass die Querrillen 6, 7 aus der einen mittleren Profilblockreihe 1 bezüglich der Umfangsrichtung gegensinnig zu den Querrillen 6, 7 aus der anderen mittleren Profilblockreihe 1 geneigt sind. Der Laufstreifen weist daher zumindest im zentralen Laufstreifenbereich Z ein "gepfeiltes" Profil mit flach "V-förmig" über die Breite des zentralen Laufstreifenbereiches Z verlaufenden Querrillen 6, 7 auf. Bei der gezeigten Ausführungsvariante weisen die innerhalb der einen mittleren Profilblockreihe 1 befindlichen Profilblöcke 5 zu den innerhalb der anderen mittleren Profilblockreihe 1 befindlichen Profilblöcken 5 bezüglich der Umfangsrichtung übereinstimmende Positionen auf.

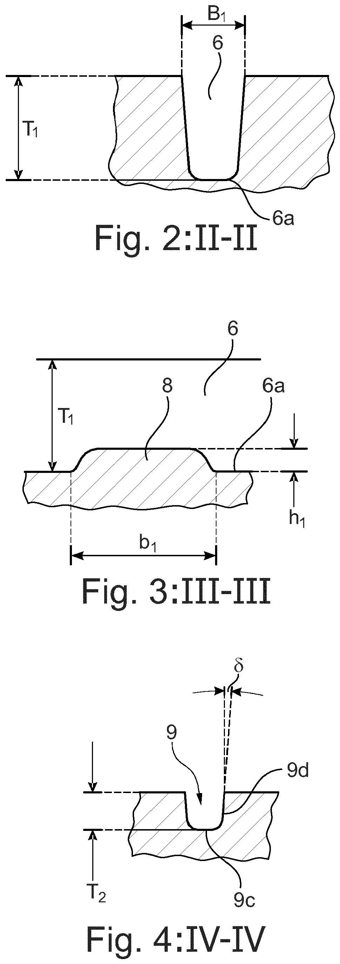

Die gerade verlaufenden Querrillen 6 verlaufen zur axialen Richtung unter einem Winkel α von 10° bis 35°, insbesondere von bis zu 25°, weisen an der Laufstreifenperipherie eine Breite B₁ (Fig. 2) von 3,0 mm bis 7,0 mm und in radialer Richtung eine Tiefe T₁ (Fig. 2) von 60% bis 100% der Profiltiefe auf, wobei die Tiefe T₁ (Fig. 2) vorzugsweise um mindestens 1,5 mm geringer ist als die Profiltiefe.

Gemäß Fig. 1 setzt sich jede geknickte Querrille 7 in Draufsicht aus einem in die zentrale Umfangsrille 3 einmündenden, laufstreifeninnenseitigen Rillenabschnitt 7a und einem an den kurzen Abschnitt 4a der entsprechenden schulterseitigen Umfangsrille 4 anschließenden, laufstreifenaußenseitigen Rillenabschnitt 7b zusammen. Die laufstreifeninnenseitigen Rillenabschnitte 7a verlaufen in Draufsicht gerade sowie innerhalb einer Profilblockreihe 1 parallel zu den gerade verlaufenden Querrillen 6 und daher ebenfalls unter dem bereits erwähnten Winkel α und weisen an der Laufstreifenperipherie eine Breite B₂ von 3,0 mm bis 7,0 mm auf, wobei die Breite B₂ beim gezeigten Ausführungsbeispiel kleiner ist als die Breite B₁ der gerade verlaufenden Querrillen 6. Jeder laufstreifenaußenseitige Rillenabschnitt 7b erstreckt sich - bezogen auf die Mittellinie m_{QR} seiner Querrille 7 - zur axialen Richtung unter einem größer als der Winkel α ausgeführten Winkel β von 30° bis 45° und verbreitet sich einseitig sowie ausgehend vom laufstreifeninnenseitigen Rillenabschnitt 7a in Richtung zur entsprechenden schulterseitigen Umfangsrille 4, sodass er, wie bereits erwähnt, an einen der kürzeren Abschnitte 4a der Umfangsrille 4 unmittelbar anschließt. Die Querrille 7 weist über ihre gesamte Erstreckung in radialer Richtung eine vorzugsweise konstante Tiefe von 60% bis 100% der Profiltiefe auf.

In jeder gerade verlaufenden Querrille 6 ist am Rillengrund 6a (siehe auch Fig. 2) eine Grundanhebung 8 ausgebildet, welche die Tiefe der Querrille 6 lokal verringert, die jeweiligen einander benachbarten mittleren Profilblöcke 5 aneinander anbindet und zur zentralen Umfangsrille 3 in axialer Richtung einen Abstand a₁ von 10,0 mm bis 25,0 mm aufweist. Gemäß Fig. 3, welche einen in Verlaufsrichtung einer Querrille 6 ausgerichteten Längsschnitt durch die Grundanhebung 8 zeigt, ist die Grundanhebung 8 beim gezeigten Ausführungsbeispiel, im Längsschnitt betrachtet, flach trapezartig ausgeführt, weist an ihrer am Rillengrund 6a liegenden Basis eine Breite b₁ von 7,0 mm bis 15,0 mm und gegenüber dem Niveau des Rillengrundes 6a in radialer Richtung eine Höhe h₁ von 1,0 mm bis 3,0 mm auf.

Wie Fig. 1 zeigt, ist innerhalb jeder mittleren Profilblockreihe 1 jeder zweite Profilblock 5 mit einer ihn durchquerenden, in eine gerade verlaufende Querrille 6 und eine geknickte Querrille 7 einmündenden Schrägnut 9 versehen, wobei die innerhalb einer Profilblockreihe 1 ausgebildeten Schrägnuten 9 in Draufsicht parallel zueinander verlaufen. Jede Schrägnut 9 verläuft - bezogen auf ihre in Rillenlaufrichtung ausgerichtete Mittellinie m_{SN} - in Draufsicht gerade, relativ zur Umfangsrichtung unter einem Winkel γ von 6° bis 12° und bezüglich der Reifenumfangsrichtung gleichsinnig zu den Querrillen 6, 7 geneigt.

Die Schrägnuten 9 weisen jeweils ein beim Abrollen des Reifens bei Vorwärtsfahrt zuerst in den Untergrund eintretendes, einlaufendes Nutende 9a und ein auslaufendes Nutende 9b auf, wobei sich das einlaufende Nutende 9a am laufstreifeninnenseitigen Rillenabschnitt 7a der jeweiligen geknickten Querrille 7 und das auslaufende Nutende 9b im Bereich der und radial außerhalb der entsprechenden Grundanhebung 8 der jeweiligen gerade verlaufenden Querrille 6 befindet.

Jede Schrägnut 9 weist in radialer Richtung eine Tiefe T₂ (Fig. 4) von 3,0 mm bis 5,0 mm auf und wird von ihrem einlaufenden Nutende 9a zu ihrem auslaufenden Nutende 9b kontinuierlicher breiter, wobei sie am einlaufenden Nutende 9a - ermittelt an der jeweiligen Querrille 7 - eine Breite Bₐ von 2,0 mm bis 6,0 mm, insbesondere von bis zu 4,0 mm, und am auslaufenden Nutende 9b - ermittelt an der jeweiligen Querrille 6 - eine Breite B_{b} von 140% bis 300%, insbesondere von 160% bis 200%, der Breite Bₐ aufweist. Gemäß Fig. 4 weist jede Schrägnut 9 einen Nutgrund 9c und Nutflanken 9d auf, welche, im Querschnitt betrachtet, zur radialen Richtung unter einem Winkel δ von 0° bis zu 7°, insbesondere von bis zu 5°, verlaufen.

Die Erfindung ist auf die beschriebene und dargestellte Ausführungsvariante nicht eingeschränkt.

Insbesondere können die Profilblöcke in an sich bekannter Weise mit einer Vielzahl von Einschnitten versehen sein. Anstelle der geknickten Querrillen können in Draufsicht gerade verlaufende Querrillen vorgesehen sein. Ferner können die Umfangsrillen in Draufsicht jeweils gerade oder zumindest abschnittweise zick-zack oder wellenförmig verlaufen.

### Bezugsziffernliste

- 1: mittlere Profilblockreihe
- 2: schulterseitige Profilblockreihe
- 3: zentrale Umfangsrille
- 4: schulterseitige Umfangsrille
- 4a: kürzerer Abschnitt
- 4b: längerer Abschnitt
- 5: Profilblock
- 6: Querrille
- 6a: Rillengrund
- 7: Querrille
- 7a: Iaufstreifeninnenseitiger Rillenabschnitt
- 7b: laufstreifenaußenseitiger Rillenabschnitt
- 8: Grundanhebung
- 9: Schrägnut
- 9a: einlaufendes Nutende
- 9b: auslaufendes Nutende
- 9c: Nutgrund
- 9d: Nutflanken
- a₁: Abstand
- A-A: Linie (Reifenäquatorialebene)
- b₁: Breite
- B₁, B₂: Breite
- Bₐ, B_{b}: Breite
- h₁: Höhe
- m_{QR}: Mittellinie
- m_{SN}: Mittellinie
- R: Pfeil (Abrollrichtung)
- T₁, T₂: Tiefe
- Z: zentraler Laufstreifenbereich
- α, β, γ, δ: Winkel

## Patentansprüche

1. Fahrzeugluftreifen mit einem Laufstreifen mit zwei durch eine Umfangsrille (3) voneinander getrennten mittleren Profilblockreihen (1) mit Profilblöcken (5) und mit diese voneinander trennenden, zur axialen Richtung gewinkelten (α, β), innerhalb jeder Profilbockreihe (1) gegenüber der Reifenumfangsrichtung gleichsinnig orientierten Querrillen (6, 7),
wobei Querrillen (6) vorgesehen sind, in welchen jeweils eine Grundanhebung (8) ausgebildet ist, und
wobei Profilblöcke (5) vorgesehen sind, in welchen jeweils eine den jeweiligen Profilblock (5) durchquerende Schrägnut (9) verläuft, welche in die eine Querrille (6) im Bereich der und radial außerhalb der Grundanhebung (8) einmündet, zur Umfangsrichtung unter einem Winkel (γ) von 6° bis 12° verläuft und eine über ihren Verlauf kontinuierlich zunehmende Breite (Bₐ, B_{b}) und daher ein schmales und ein breites Nutende (9a, 9b) aufweist,
**dadurch gekennzeichnet,**
**dass** der Laufstreifen laufrichtungsgebunden ausgeführt ist,
wobei in jeder Profilblockreihe (1) ausschließlich jeder zweite Profilblock (5) mit einer Schrägnut (9) und ausschließlich jede zweite Querrille (6) mit einer Grundanhebung (8) versehen ist,
wobei in jeder der beiden mittleren Profilblockreihen (1) die Schrägnuten (9) bezüglich der Reifenumfangsrichtung gleichsinnig zu den Querrillen (6, 7) geneigt sind,
wobei die Querrillen (6, 7) und die Schrägnuten (9) in der einen mittleren Profilblockreihe (1) zu den Querrillen (6, 7) und Schrägnuten (9) in der anderen mittleren Profilblockreihe (1) derart bezüglich der Reifenumfangsrichtung gegensinnig geneigt sind, dass bei am Fahrzeug montiertem Fahrzeugluftreifen bei Vorwärtsfahrt (R) die Querrillen (6, 7) mit ihren weiter laufstreifeninnenseitig befindlichen Rillenenden, und die Schrägnuten (9) mit ihren schmalen Nutenden (9a) zuerst in den Untergrund eintreten.

2. Fahrzeugluftreifen nach Anspruch 1, **dadurch gekennzeichnet, dass** die Breite (B_{b}) der Schrägnuten (9) am breiten Nutende (9b) 140% bis 300%, insbesondere 160% bis 200%, der Breite (Bₐ) der Schrägnuten (9) am schmalen Nutende (9a) beträgt.

3. Fahrzeugluftreifen nach Anspruch 1 oder 2, **dadurch gekennzeichnet, dass** die Breite (Bₐ) der Schrägnuten (9) am schmalen Nutende (9a) 2,0 mm bis 6,0 mm, insbesondere bis zu 4,0 mm, beträgt.

4. Fahrzeugluftreifen nach einem der Ansprüche 1 bis 3, **dadurch gekennzeichnet, dass** die Schrägnuten (9) in radialer Richtung eine Tiefe (T₃) von 3,0 mm bis 5,0 mm aufweisen.

5. Fahrzeugluftreifen nach einem der Ansprüche 1 bis 4, **dadurch gekennzeichnet, dass** die Querrillen (6), in welchen jeweils eine Grundanhebung (8) ausgebildet ist, in Draufsicht gerade verlaufen.

6. Fahrzeugluftreifen nach einem der Ansprüche 1 bis 5, **dadurch gekennzeichnet, dass** sich die Querrillen (7), in welchen keine Grundanhebungen (8) ausgebildet sind, in Draufsicht jeweils aus einem laufstreifeninnenseitigen Rillenabschnitt (7a) und einem gegenüber dem laufstreifeninnenseitigen Rillenabschnitt (7a) zur axialen Richtung stärker geneigten laufstreifenaußenseitigen Rillenabschnitt (7b) zusammensetzen, wobei die Schrägnuten (9) jeweils in einen laufstreifeninnenseitigen Rillenabschnitt (7a) einmünden.

7. Fahrzeugluftreifen nach Anspruch 6, **dadurch gekennzeichnet, dass** die laufstreifeninnenseitigen Rillenabschnitte (7a) der Querrillen (7), in welchen keine Grundanhebungen (8) ausgebildet sind, schmäler sind als jene Querrillen (6), in welchen jeweils eine Grundanhebung (8) ausgebildet ist.

8. Fahrzeugluftreifen nach einem der Ansprüche 1 bis 7, **dadurch gekennzeichnet, dass** sich die zu der einen mittleren Profiblockreihe (1) gehörenden Profilblöcke (5) zu den zu der anderen mittleren Profilblockreihe (1) gehörenden Profilblöcken (5) bezüglich der Umfangsrichtung in übereinstimmenden Positionen befinden, wobei die Schrägnuten (9) in axial nebeneinander liegenden Profilblöcken (5) verlaufen.

9. Fahrzeugluftreifen nach einem der Ansprüche 1 bis 8, **dadurch gekennzeichnet, dass** die Grundanhebungen (8) in den Querrillen (6) zu der die Profilblockreihen (1) trennenden Umfangsrille (3) in axialer Richtung einen Abstand (a₁) von 10,0 mm bis 25,0 mm aufweisen.

10. Fahrzeugluftreifen nach einem der Ansprüche 1 bis 9, **dadurch gekennzeichnet, dass** die Schrägnuten (9) Nutflanken (9d) aufweisen, welche im Querschnitt betrachtet, zur radialen Richtung unter einem Winkel (δ) von 0° bis zu 7°, insbesondere von bis zu 5°, verlaufen.

11. Fahrzeugluftreifen nach einem der Ansprüche 1 bis 10, **dadurch gekennzeichnet, dass** die Querrillen (7), in welchen keine Grundanhebungen (8) ausgebildet sind, in radialer Richtung insbesondere um 1,5 mm seichter ausgeführt sind als die Querrillen (6), in welchen jeweils eine Grundanhebung (8) ausgebildet ist.

12. Fahrzeugluftreifen nach einem der Ansprüche 1 bis 11, **dadurch gekennzeichnet, dass** die die Profilblockreihen (1) voneinander trennende Umfangsrille (3) entlang der Reifenäquatorialebene (A-A) verläuft.

## Claims

1. Pneumatic vehicle tyre having a tread having two central profile block rows (1) that are mutually separated by a circumferential groove (3) and have profile blocks (5), said profile blocks having transverse grooves (6, 7) which mutually separate said profile blocks and within each profile block row (1) are oriented so as to be angled in the same direction in relation to the axial direction (α, β); wherein transverse grooves (6) in which a base elevation (8) is in each case configured are provided; and
wherein profile blocks (5) in which an oblique groove (9) runs in each case so as to traverse the respective profile block (5) are provided, said oblique groove in the region of the base elevation (8) and radially outside the latter opening into the one transverse groove (6), running at an angle (γ) of 6° to 12° in relation to the circumferential direction and across the course of said oblique groove having a continuously increasing width (Bₐ, B_{b}) and therefore having one narrow and one wide groove end (9a, 9b),
**characterized in that**
the tread is embodied so as to be directional, wherein in each profile block row (1) each second profile block (5) exclusively is provided with an oblique groove (9) and each second transverse groove (6) exclusively is provided with a base elevation (8) ;
wherein in each of the two central profile block rows (1) the oblique grooves (9) in terms of the tyre circumferential direction are inclined in the same direction toward the transverse grooves (6, 7) ; wherein the transverse grooves (6, 7) and the oblique grooves (9) in the one central profile block row (1) in terms of the tyre circumferential direction are inclined toward the transverse grooves (6, 7) and oblique grooves (9) in the other central profile block row (1) in opposite directions in such a manner that, in the case of a pneumatic vehicle tyre assembled on the vehicle, during forward travel (R) the transverse grooves (6, 7) by way of the groove ends thereof that are situated closer to the inner side of the tread and the oblique grooves (9) by way of the narrow groove ends (9a) thereof first encounter the underlying surface.

2. Pneumatic vehicle tyre according to Claim 1, **characterized in that** the width (B_{b}) of the oblique grooves (9) at the wide groove end (9b) is 140% to 300%, in particular 160% to 200%, of the width (Bₐ) of the oblique grooves (9) at the narrow groove end (9a) .

3. Pneumatic vehicle tyre according to Claim 1 or 2, **characterized in that** the width (Bₐ) of the oblique grooves (9) at the narrow groove end (9a) is 2.0 mm to 6.0 mm, in particular up to 4.0 mm.

4. Pneumatic vehicle tyre according to one of Claims 1 to 3, **characterized in that** the oblique grooves (9) in the radial direction have a depth (T₃) of 3.0 mm to 5.0 mm.

5. Pneumatic vehicle tyre according to one of Claims 1 to 4, **characterized in that** the transverse grooves (6) in which a base elevation (8) is in each case configured in the plan view run so as to be straight.

6. Pneumatic vehicle tyre according to one of Claims 1 to 5, **characterized in that** the transverse grooves (7) in which no base elevations (8) are configured in the plan view are in each case composed of a tread inner-side groove portion (7a) and a tread outer-side groove portion (7b) that in relation to the tread inner side groove portion (7a) is more inclined toward the axial direction, wherein the oblique grooves (9) open in each case into a tread inner-side groove portion (7a).

7. Pneumatic vehicle tyre according to Claim 6, **characterized in that** the tread inner-side groove portions (7a) of the transverse grooves (7) in which no base elevations (8) are configured, are configured so as to be narrower than those transverse grooves (6) in which a base elevation (8) is in each case configured.

8. Pneumatic vehicle tyre according to one of Claims 1 to 7, **characterized in that** the profile blocks (5) which are associated with the one central profile block row (1) in terms of the circumferential direction are in identical positions in relation to the profile blocks (5) which are associated with the other central profile block row (1), wherein the oblique grooves (9) run in profile blocks (5) that lie axially next to one another.

9. Pneumatic vehicle tyre according to one of Claims 1 to 8, **characterized in that** the base elevations (8) in the transverse grooves (6) have a spacing (a₁) of 10.0 mm to 25.0 mm from the circumferential groove (3) that separates the profile block rows (1) in the axial direction.

10. Pneumatic vehicle tyre according to one of Claims 1 to 9, **characterized in that** the oblique grooves (9) have groove flanks (9d) which when viewed in the cross section run at an angle (δ) of 0° up to 7°, in particular of up to 5°, in relation to the radial direction.

11. Pneumatic vehicle tyre according to one of Claims 1 to 10, **characterized in that** the transverse grooves (7) in which no base elevations (8) are configured, in the radial direction are embodied so as to be shallower by in particular 1.5 mm than the transverse grooves (6) in which a base elevation (8) is in each case configured.

12. Pneumatic vehicle tyre according to one of Claims 1 to 11, **characterized in that** the circumferential groove (3) that mutually separates the profile block rows (1) runs along the tyre equatorial plane (A-A) .

## Revendications

1. Pneumatique de véhicule muni d'une bande de roulement munie de deux rangées centrales de blocs profilés (1) séparées l'une de l'autre par une rainure circonférentielle (3), munies de blocs profilés (5) et munies de rainures transversales (6, 7) séparant ceux-ci les uns des autres, à un angle (α, β) par rapport à la direction axiale, orientées dans le même sens par rapport à la direction circonférentielle du pneumatique à l'intérieur de chaque rangée de blocs profilés (1), des rainures transversales (6) dans lesquelles une élévation de fond (8) est formée à chaque fois étant prévues, et
des blocs profilés (5) dans lesquels une encoche oblique (9) transversant le bloc profilé respectif (5) s'étend à chaque fois étant prévus, qui débouche dans une rainure transversale (6) dans la zone de et radialement à l'extérieur de l'élévation de fond (8), s'étend à un angle (γ) de 6° à 12° par rapport à la direction circonférentielle et présente une largeur (Bₐ, B_{b}) augmentant continuellement sur son étendue et par conséquent une extrémité d'encoche étroite et une extrémité d'encoche large (9a, 9b),
**caractérisé en ce que**
la bande de roulement est réalisée sous forme directionnelle,
dans chaque rangée de blocs profilés (1), exclusivement un bloc profilé (5) sur deux étant muni d'une encoche oblique (9) et exclusivement une rainure transversale (6) sur deux étant munie d'une élévation de fond (8), dans chacune des deux rangées centrales de blocs profilés (1), les encoches obliques (9) étant inclinées dans le même sens par rapport aux rainures transversales (6, 7) au regard de la direction circonférentielle du pneumatique,
les rainures transversales (6, 7) et les encoches obliques (9) dans une rangée centrale de blocs profilés (1) étant inclinées en sens inverse au regard de la direction circonférentielle du pneu par rapport aux rainures transversales (6, 7) et aux encoches obliques (9) dans l'autre rangée centrale de blocs profilés (1), de telle sorte que, lorsque le pneumatique de véhicule est monté sur le véhicule, en marche avant (R), les rainures transversales (6, 7) pénètrent d'abord dans le sol avec leurs extrémités de rainure se trouvant plus à l'intérieur de la bande de roulement et les encoches obliques (9) pénètrent d'abord dans le sol avec leurs extrémités d'encoche étroites (9a).

2. Pneumatique de véhicule selon la revendication 1, **caractérisé en ce que** la largeur (B_{b}) des encoches obliques (9) à l'extrémité d'encoche large (9b) est de 140 % à 300 %, notamment de 160 % à 200 %, de la largeur (Bₐ) des encoches obliques (9) à l'extrémité d'encoche étroite (9a).

3. Pneumatique de véhicule selon la revendication 1 ou 2, **caractérisé en ce que** la largeur (Bₐ) des encoches obliques (9) à l'extrémité d'encoche étroite (9a) est de 2,0 mm à 6,0 mm, notamment de jusqu'à 4,0 mm.

4. Pneumatique de véhicule selon l'une quelconque des revendications 1 à 3, **caractérisé en ce que** les encoches obliques (9) présentent dans la direction radiale une profondeur (T₃) de 3,0 mm à 5,0 mm.

5. Pneumatique de véhicule selon l'une quelconque des revendications 1 à 4, **caractérisé en ce que** les rainures transversales (6) dans lesquelles une élévation de fond (8) est formée à chaque fois s'étendent sous forme droite en vue de dessus.

6. Pneumatique de véhicule selon l'une quelconque des revendications 1 à 5, **caractérisé en ce que** les rainures transversales (7) dans lesquelles aucune élévation de fond (8) n'est formée sont composées à chaque fois, en vue de dessus, d'une section de rainure à l'intérieur de la bande de roulement (7a) et d'une section de rainure à l'extérieur de la bande de roulement (7b) inclinée plus fortement par rapport à la direction axiale par rapport à la section de rainure à l'intérieur de la bande de roulement (7a), les encoches obliques (9) débouchant à chaque fois dans une section de rainure à l'intérieur de la bande de roulement (7a).

7. Pneumatique de véhicule selon la revendication 6, **caractérisé en ce que** les sections de rainure à l'intérieur de la bande de roulement (7a) des rainures transversales (7) dans lesquelles aucune élévation de fond (8) n'est formée sont plus étroites que les rainures transversales (6) dans lesquelles une élévation de fond (8) est formée à chaque fois.

8. Pneumatique de véhicule selon l'une quelconque des revendications 1 à 7, **caractérisé en ce que** les blocs profilés (5) appartenant à une rangée centrale de blocs profilés (1) se trouvent dans des positions coïncidentes au regard de la direction circonférentielle par rapport aux blocs profilés (5) appartenant à l'autre rangée centrale de blocs profilés (1), les encoches obliques (9) s'étendant dans des blocs profilés (5) situés axialement les uns à côté des autres.

9. Pneumatique de véhicule selon l'une quelconque des revendications 1 à 8, **caractérisé en ce que** les élévations de fond (8) dans les rainures transversales (6) présentent un écart (a₁) en direction axiale de 10,0 mm à 25,0 mm par rapport à la rainure circonférentielle (3) séparant les rangées de blocs profilés (1).

10. Pneumatique de véhicule selon l'une quelconque des revendications 1 à 9, **caractérisé en ce que** les encoches obliques (9) comprennent des flancs d'encoche (9d) qui, tels que vus dans la coupe transversale, s'étendent à un angle (δ) par rapport à la direction radiale de 0° à 7°, notamment de jusqu'à 5°.

11. Pneumatique de véhicule selon l'une quelconque des revendications 1 à 10, **caractérisé en ce que** les rainures transversales (7) dans lesquelles aucune élévation de fond (8) n'est formée sont réalisées sous forme moins profonde notamment de 1,5 mm dans la direction radiale que les rainures transversales (6) dans lesquelles une élévation de fond (8) est formée à chaque fois.

12. Pneumatique de véhicule selon l'une quelconque des revendications 1 à 11, **caractérisé en ce que** la rainure circonférentielle (3) séparant les rangées de blocs profilés (1) l'une de l'autre s'étend le long du plan équatorial du pneu (A-A).
